(19) Europäisches Patentamt
European Patent Office
Office européen des brevets

(11) **EP 0 772 718 B1**

(12) **EUROPEAN PATENT SPECIFICATION**

(45) Date of publication and mention
of the grant of the patent:
**17.06.1998 Bulletin 1998/25**

(21) Application number: **95926932.5**

(22) Date of filing: **18.07.1995**

(51) Int Cl.6: **E01C 19/10**, C08L 95/00

(86) International application number:
**PCT/EP95/02819**

(87) International publication number:
**WO 96/04427 (15.02.1996 Gazette 1996/08)**

(54) **PROCESS FOR PREPARING A BITUMINOUS COLD-MIX**

VERFAHREN ZUR HERSTELLUNG VON BITUMINÖSEM KALTEINBAUMISCHGUT

PROCEDE DE PREPARATION DES MATERIAUX BITUMINEUX ENROBES A FROID

(84) Designated Contracting States:
**ES FR GB IT**

(30) Priority: **29.07.1994 FR 9409461**

(43) Date of publication of application:
**14.05.1997 Bulletin 1997/20**

(73) Proprietor: **ESSO SOCIETE ANONYME FRANCAISE**
**92569 Rueil-Malmaison Cédex (FR)**

(72) Inventor: **BOUSSAD, Nadjib**
**Esso Société Anonyme Française**
**F-76130 Mont-Saint-Aignan (FR)**

(74) Representative: **Fletcher Watts, Susan J. et al**
**ESSO Engineering (Europe) Limited,**
**Patents and Licences,**
**Mailpoint 72,**
**Esso House,**
**Ermyn Way**
**Leatherhead, Surrey KT22 8XE (GB)**

(56) References cited:
**EP-A- 0 283 246**          **EP-A- 0 524 031**
**EP-A- 0 589 740**          **DE-A- 1 941 688**
**FR-A- 2 623 219**

## Description

The present invention relates to the preparation of bituminous cold-mix, principally for the surfacing of roads.

Cold bitumen emulsions provide a useful alternative to molten bitumen for coating aggregate for application as cold-mixes to roads and similar surfaces subjected to traffic or other hard wear. Cold mixes have the advantage that they can be applied at low temperatures, e.g. at locations where heating equipment is not readily available. After the cold-mix is applied to the road surface, the emulsion breaks and bitumen deposits on and coats the aggregate particles.

There are, however, a number of problems associated with cold-mixes.

To obtain the best performance, it is desirable to use a hard bitumen. However, hard bitumens, e.g. having a penetration (pen value) of 80 or below (according to NFT 66.004, where NFT designates the French standard Normale Française Technique, or ASTM D5-86), are brittle and deficient in tack, which leads to a low compaction efficiency. Solvents are often added, resulting in a fluxed bitumen, to lower the viscosity of the bitumen at emulsification temperature and make the application of the cold-mix easier. However the use of solvents has the drawback that they require time to evaporate.

Road surfaces are designed by testing core samples in modulus and fatigue. When hot-coated aggregate is applied it is possible to take core samples a few days afterwards. With samples of surface laid using emulsion, the cores tend to break up if taken within several months after laying. Early coring problems are due to slow build-up of cohesion and this in turn can be caused by inefficient coating of the aggregate and high void content in the structure. Aggregate is constituted of a mixture of particles of different sizes, from fine powder and sand up to e.g. 35 mm. The finer particles in the aggregate spectrum are easier to coat than the larger particles. Attempts have been made to reduce this problem by successively coating larger and smaller fractions, as described in EP-A-524031. However, early coring remains problematic.

EP-A-589740 describes a road surfacing composition using bituminous cold-mix. Aggregate is coated with bitumen emulsion comprising a mixture of hard bitumen having a standard penetration of 70 or less, and soft bitumen having a standard penetration of 180 or more.

The invention is aimed at providing a process for the preparation of bituminous cold-mix which permits the use of hard bitumen while achieving a rapid cohesion build-up and acceptably early coring.

The present invention provides a process for preparing a bituminous cold-mix for road building and similar paving uses, comprising the steps of :

(a) applying to an aggregate of mixed particle size a first bitumen emulsion having a breaking index higher than 190, according to NFT 66.017, to coat at least 80% of the aggregate surface with no more than 5 weight % of residual bitumen; and

(b) applying to the coated aggregate from step (a) a second bitumen emulsion having a breaking index no higher than 190, according to NFT 66.017, to produce fully coated aggregate particles.

Preferably step (a) provides the said coating with no more than 2.5 wt.% residual bitumen.

Preferably, the bitumens of the first and second emulsions each have a softening point (NFT 66.008) in the range of from 20 to 85 and a penetration (pen value) (NFT 66.004) in the range of from 20 to 400, e.g. from 20 to 80. Preferably, the bitumen of the first emulsion has a pen value in the range of from 20 to 80 (e.g., from 35 to 55, and usually from 40 to 50). The bitumen of the second emulsion may have a pen value equal to or greater than that of the bitumen of the first emulsion.

The bitumen of the second emulsion may be a polymer-modified bitumen. The polymer may have a number average molecular weight ($M\underline{n}$) in the range of from 2000 to 300,000. The bitumen may be modified with up to 10 wt.% of polymer (homopolymer or copolymer). Examples of suitable polymers are styrene/butadiene/styrene (SBS), ethene/vinyl acetate copolymer (EVA) and polyethylmethacrylate (EMA). The polymers may have a number average molecular weight ($M\underline{n}$) in the range of from 2,000 to 300,000 (as determined by gas phase chromatography : GPC).

The bitumen of the second emulsion may be fluxed. The use of fluxed bitumen provides the advantage of good storage stability, but is attended with the disadvantages already mentioned.

From 1 to 4 wt.% (e.g., from 1 to 3 wt.%) (based on the weight of coated aggregate) of the first emulsion may be used in step (a) and/or from 3 to 7 wt.% (e.g., from 3 to 6 wt.%), based on the weight of coated aggregate, of the second emulsion may be used in step (b).

At least the first emulsion may have a particle diameter in the range of from 2 to 8 µm (e.g., 2 to 6 µm) with a standard deviation of less than 0.3 (e.g., no more than 0.25).

At least the first emulsion may be prepared using a static mixer or a plurality of serially-connected static mixers.

The invention also provides a road or similar paved area constructed using a bituminous cold-mix composition made by the process as herein described.

The first emulsion can be considered to be over-stabilised. This is desirable in order to ensure that it can be kept in storage and re-coated at a later stage. It also helps to ensure a fine emulsion and efficient coating. The stability of emulsions can be measured by the LCPC French standard Laboratoire Centrale des Ponts et Chemins breaking index (NFT 66.017) and is normally controlled through the proportion of emulsifier used.

A larger amount of emulsifier is used in the first emulsion than in the second. The proportion of emulsifier in the first emulsion is selected to produce a breaking index of above 190.

On the other hand, the proportion of emulsifier in the second emulsion is selected to produce a breaking index no higher than 190.

The content of emulsifier in said first emulsifier may be from 0.8 to 2 wt.% and the content of emulsifier in said second emulsion may be from 0.1 to 0.8 wt.%, based on the total weight of emulsion.

Cationic emulsifiers are preferred, especially compounds resulting from the reaction of an amine having 10 or more carbon atoms with an inorganic acid. Especially preferred are salts of tallow polyamine (more especially in the first emulsion) and tallow diamine.

Although the preferred second emulsions may be selected so as to be not very storage-stable, their breaking occurs after a controlled delay and this ensures a rapid cohesion build-up in the cold-mixes.

In order to achieve 100% coating of the final particles it is important that as complete a coverage of the aggregate is achieved in the first coating over the whole particle size spectrum. Coating should be at least 80% complete, more preferably 85% or 90% or more. In order to achieve this, it is advantageous for the emulsion to be in the form of very fine and substantially uniform particles. Thus preferably at least the first emulsion has a median particle diameter from 2 to 8 μm, more preferably from 2 to 6 μm. Preferably the standard deviation in median particle diameter is less than 0.3, more preferably less than 0.25. In the preferred process to be described both emulsions are prepared in the same way. This may be accomplished for the first and preferably also the second emulsion utilising a static mixer or a plurality of serially-connected static mixers.

A particularly advantageous plural stage static mixing process is that described in the Applicant's European patent publication EP-A-283246. Thus the present preferred process comprises:

(a) feeding the bitumen into a first static mixer at a temperature above 50°C,

(b) introducing water under pressure into the first static mixer, the pressure being sufficient to prevent substantial vaporisation of the water,

(c) introducing an emulsifier into the first static mixer,

(d) mixing the bitumen, water and emulsifier in the first static mixer,

(e) passing the resultant mixture from the first static mixer to a second static mixer in which the temperature is lower than that prevailing in the first static mixer and below the boiling point of water,

(f) passing the mixture through the second static mixer, and

(g) removing the bitumen emulsion product from the second static mixer without substantial loss of water.

The temperature in the first static mixer is preferably from 110°C to 150°C, and the pressure in the first static mixer is preferably from 2 to 80 bar.

In the preferred process the mixture passing through the second static mixer is subjected to a pressure drop and cooling whereby the product emerges at substantially atmospheric pressure and below 100°C.

Using emulsions prepared by the process of EP-A-283246, it is possible to obtain 90% coating of the particles with a maximum of 2.5 wt.%, e.g. 2 wt.% or less, residual bitumen.

From 1 to 4 wt.%, e.g. from 1 to 3 wt.% emulsion is preferably added to the aggregate in the first coating step and from 3 to 7 wt.%, e.g. from 3 to 6 wt.% in the second step (based on the weight of coated aggregate).

The bitumen used in the first emulsion may be a natural bitumen resulting from the distillation of crude oil. This may also be used in the second emulsion, although the latter may also be a modified or fluxed bitumen.

The process of the invention leads to high performance cold-mixes which are readily cored and have the appearance of hot-mix material. The following examples further illustrate the invention.

In the following examples two Kenics® static mixers as described in Chemineers Brochure 800E published in 1984 by Chemineer Ltd. were used in series with the outlet of the first mixer leading directly to the inlet of a larger diameter mixer, as described in EP-A-283246. Bitumen at 130°C to 170°C was pumped into the first mixer. Water and emulsifier were introduced under pressure into the bitumen upstream of the inlet. The conditions in the first mixer were: temperature 110°-150°C and pressure 10 to 80 bar. The product from the first mixer was fed to the second mixer and quench dilution water was added at the inlet of the second mixer. The conditions in the second mixer were such that the product emerged at atmospheric pressure and at approximately 80° to 95°C. The amine emulsifier was in each case neutralised with sufficient hydrochloric acid to bring the final emulsion to a pH of from 2 to 4.5.

## EXAMPLE 1

A first 60 wt.% emulsion was prepared (as above) from natural 40/50 pen bitumen using 1.3 wt.% (based on the weight of emulsion) of tallow polyamine chloride (CECA Polyram® S, obtainable from British Ceca Co. Ltd., London, U.K.) as emulsifier. The emulsion had the following characteristics:

Median particle diameter 3.8 µm (measured by Coulter® counter)
Standard deviation 0.16
Breaking index 250

A cold mix was prepared using 2.2 wt.% of this emulsion and 0/20 mm diorite aggregate. The aggregate was 100% coated and was found to be workable after one week of storage.

A second 60 wt.% emulsion was prepared similarly from 40/50 pen natural bitumen using 0.2 wt.% tallow diamine chloride as emulsifier. The characteristics of this emulsion are as follows:

Median particle diameter 4.0 µm
Standard deviation 0.16
Breaking index 120

A cold mix was prepared using 2.2 wt.% of this emulsion and the pre-coated 0/20 mm diorite aggregate from the first stage. Diorite aggregate is commonly used as a standard aggregate for this type of experiment. This material was 100% coated. It had the appearance of a hot mix and after compaction was found to be very cohesive.

## EXAMPLE 2

A first 60 wt.% emulsion was prepared (as above) from natural 40/50 pen bitumen using 1.3 wt.% (based on the weight of emulsion) of tallow polyamine chloride (as in Example 1) as emulsifier. A slightly lower pressure was used than in Example 1. The emulsion had the following characteristics:

Median particle diameter 5.1 µm
Standard deviation 0.22
Breaking index 239

A cold mix was prepared using 2.2 wt.% of this emulsion and 0/10 mm diorite aggregate. The aggregate was 100% coated and was found to be workable after two weeks of storage.

A second 60 wt.% emulsion was prepared similarly from 40/50 pen natural bitumen using 0.2 wt.% tallow polyamine chloride as emulsifier. The characteristics of this emulsion are as follows:

Median particle diameter 5.2 µm
Standard deviation 0.22
Breaking index 110

A cold mix was prepared using 6.0 wt.% of this emulsion and the pre-coated 0/10 mm diorite aggregate from the first stage. This material was 100% coated and had the appearance of a hot mix. A slab was manufactured and cored after three weeks of storage at ambient temperature. The dynamic moduli and fatigue behaviour were determined with the following results using the Esso Road Design Technology (ERDT) technique described in Celard, B., Proceedings of the 4th International Conference, Structural Design of Asphalt Pavements, Ann Arbor 1977, vol. 1, page 26.

| Dynamic modulus (Mpa) | | |
|---|---|---|
| Frequency (Hz) | 10°C | 20°C |
| 20 | 5341 | 2893 |
| 10 | 4700 | 2407 |
| 3 | 3786 | 1691 |
| 1 | 2943 | 1215 |
| 0.3 | 2202 | 816 |
| 0.1 | 1645 | 570 |

The fatigue behaviour for the materials used in this example is described by the following equation:

$$\log_{10}(N) = [-2.985 \log_{10}(\varepsilon_0)] - 7.724$$

at 10°C and 10 Hz.

In the equation, N is the number of cycles to failure, and $\varepsilon_0$ is the initial strain.

We believe this is the first occasion on which the fatigue behaviour of a cold mix has been determined in this way.

In this example, not only was the slab easily cored, but clear modulus measurements were possible.

## EXAMPLE 3

The preparation of the pre-coated particles or (first stage cold-mix) repeated the procedure of Example 2.

A 65 wt.% emulsion was prepared similarly from a bitumen of 180/220 pen fluxed with 6 wt.% of kerosene, using 0.2 wt.% tallow polyamine hydrochloride as emulsifier.

A cold mix was prepared using 2.2 wt. % of this emulsion and the pre-coated aggregate from the first stage. The characteristics of this emulsion are as follows:

Median particle diameter 7.5 µm
Standard deviation 0.18
Breaking index 148

A complete coating was obtained and the resulting cold-mix was found to have excellent storing properties.

## EXAMPLE 4

The preparation of the pre-coated particles or (first stage cold-mix) repeated the procedure of Example 2.

A 65 wt.% emulsion was prepared similarly from a natural 180/220 pen bitumen modified with 5 wt.% of

SBS polymer of $\underline{Mn}$ about 200,000, using 0.2 wt.% tallow polyamine chloride (as in Example 1) as emulsifier.

A cold mix was prepared using 2.2. wt.% of this emulsion and the pre-coated 0/20 mm diorite aggregate from the first stage. A complete coating was obtained.

A slab was manufactured and cored after three weeks of storage at room temperature. The dynamic modulus was measured with the following results:

| Dynamic modulus (Mpa) | | |
|---|---|---|
| Frequency (Hz) | 10°C | 20°C |
| 20 | 2028 | 1032 |
| 10 | 1691 | 829 |
| 3 | 1559 | 542 |
| 1 | 548 | 285 |
| 0.3 | 303 | 80 |
| 0.1 | 162 | 21 |

The fatigue behaviour was also determined using the equation, for 10°C and 10 Hz :

$$\log_{10}(N) = [-2.911 \log_{10}(\varepsilon_0)] - 6.648$$

wherein N and $\varepsilon_0$ have the meanings explained in Example 2.

The coefficients and constants in the equation relate to the materials used in Example 4. They differ from their Example 2 counterparts because the materials used in Example 2 are different.

**Claims**

1. A process for preparing a bituminous cold-mix for road building and similar paving uses, comprising the steps of:

   (a) applying to an aggregate of mixed particle size a first bitumen emulsion having a breaking index higher than 190, according to NFT 66.017, to coat at least 80% of the aggregate surface with no more than 5 weight % of residual bitumen; and

   (b) applying to the coated aggregate from step (a) a second bitumen emulsion having a breaking index no higher than 190, according to NFT 66.017, to produce fully coated aggregate particles.

2. The process of claim 1 wherein step (a) provides said coating with no more than 2.5 wt.% residual bitumen.

3. The process of claim 1 or claim 2 wherein the bitumen of the first and second emulsions each has a softening point (NFT 66.008) in the range of from 20 to 85 and a penetration (pen value) (NFT 66.004) in the range of from 20 to 80.

4. The process of claim 3 wherein the bitumen of the first emulsion has a pen value in the range of from 20 to 80, in particular from 35 to 55.

5. The process of any one of claims 1 to 4 wherein the bitumen of the second emulsion has a pen value equal to or greater than that of the bitumen of the first emulsion.

6. The process of any one of claims 1 to 5 wherein the bitumen of the second emulsion is a polymer-modified bitumen, and wherein the polymer may have a number average molecular weight ($\underline{Mn}$) in the range of from 2000 to 300,000.

7. The process of any one of claims 1 to 6 wherein the bitumen of the second emulsion is fluxed.

8. The process of any one of claims 1 to 7 wherein from 1 to 4 wt.%, in particular from 1 to 3 wt.%, based on the weight of coated aggregate, of the first emulsion is used in step (a) and/or from 3 to 7 wt. %, in particular from 3 to 6 wt.%, based on the weight of coated aggregate, of the second emulsion is used in step (b).

9. The process of any one of claims 1 to 8 wherein at least the first emulsion has a particle diameter in the range of from 2 to 8 μm, in particular 2 to 6 μm, with a standard deviation of less than 0.3, in particular no more than 0.25.

10. The process of any one of claims 1 to 9 wherein at least the first emulsion is prepared using a static mixer or a plurality of serially-connected static mixers.

11. A road or similar paved area constructed using a bituminous cold-mix composition made by the process of any one of claims 1 to 10.

**Patentansprüche**

1. Verfahren zur Herstellung einer bituminösen Kaltmischung für den Straßenbau und ähnliche Befestigungsanwendungen, bei dem

   (a) auf ein Zuschlagmaterial von gemischter Teilchengröße eine erste Bitumenemulsion mit einem Brechindex von mehr als 190 gemäß NFT 66.017 aufgebracht wird, um mindestens 80 % der Oberfläche des Zuschlagmaterials mit nicht mehr als 5 Gew.% verbleibendem Bitumen zu beschichten, und

(b) auf das beschichtete Zuschlagmaterial aus Stufe (a) eine zweite Bitumenemulsion mit einem Brechindex von nicht höher als 190 gemäß NTF 66.017 aufgebracht wird, um vollständig beschichtete Zuschlagmaterialteilchen zu erzeugen.

2. Verfahren nach Anspruch 1, bei dem Stufe (a) die Beschichtung mit nicht mehr als 2,5 Gew.% verbleibendem Bitumen liefert.

3. Verfahren nach Anspruch 1 oder Anspruch 2, bei dem das Bitumen der ersten und zweiten Emulsion jeweils einen Erweichungspunkt (NFT 66.008) im Bereich von 20 bis 85 und einen Penetrationswert (Pen-Wert) (NFT 66.004) im Bereich von 20 bis 80 hat.

4. Verfahren nach Anspruch 3, bei dem das Bitumen der ersten Emulsion einen Pen-Wert im Bereich von 20 bis 80, insbesondere 35 bis 55 besitzt.

5. Verfahren nach einem der Ansprüche 1 bis 4, bei dem das Bitumen der zweiten Emulsion einen Pen-Wert aufweist, der gleich oder größer als der des Bitumens der ersten Emulsion ist.

6. Verfahren nach einem Ansprüche 1 bis 5, bei dem das Bitumen der zweiten Emulsion ein polymermodifiziertes Bitumen ist und das Polymer ein durchschnittliches Molekulargewicht (Zahlenmittel) ($\overline{M}_n$) im Bereich von 2000 bis 300 000 hat.

7. Verfahren nach einem der Ansprüche 1 bis 6, bei dem das Bitumen der zweiten Emulsion Fluxbitumen ist.

8. Verfahren nach einem der Ansprüche 1 bis 7, bei dem 1 bis 4 Gew.%, insbesondere 1 bis 3 Gew.%, bezogen auf das Gewicht des beschichteten Zuschlagmaterials, der ersten Emulsion in Stufe (a) verwendet werden und/oder 3 bis 7 Gew.%, insbesondere 3 bis 6 Gew.%, bezogen auf das Gewicht des beschichteten Zuschlagmaterials, der zweiten Emulsion in Stufe (b) verwendet werden.

9. Verfahren nach einem der Ansprüche 1 bis 8, bei dem mindestens die erste Emulsion einen Teilchendurchmesser im Bereich von 2 bis 8 μm, insbesondere 2 bis 6 μm, mit einer Standardabweichung von weniger als 0,3, insbesondere nicht mehr als 0,25 aufweist.

10. Verfahren nach einem der Ansprüche 1 bis 9, bei dem mindestens die erste Emulsion unter Verwendung eines statischen Mischers oder einer Vielzahl von in Reihe verbundenen statischen Mischern hergestellt wird.

11. Straße oder ähnlicher mit einem Belag versehener Bereich, die bzw. der unter Verwendung einer nach dem Verfahren gemäß einem der Ansprüche 1 bis 10 hergestellten bituminösen Kaltmischungszusammensetzung gebaut ist.

## Revendications

1. Procédé de préparation d'un mélange bitumineux à froid pour la construction de routes et des applications de pavement similaires, comprenant les étapes suivantes :

(a) on applique à un agrégat de particules de tailles mélangées une première émulsion de bitume ayant un indice de rupture supérieur à 190, selon la norme NFT 66.017, pour enrober au moins 80% de la surface de l'agrégat par une quantité qui ne dépasse pas 5% en poids de bitume résiduel, et

(b) on applique sur l'agrégat enrobé de l'étape (a) une seconde émulsion de bitume ayant un indice de rupture qui n'est pas supérieur à 190, selon la norme NFT 66.017, pour produire des particules agrégées complètement enrobées.

2. Procédé selon la revendication 1, dans lequel l'étape (a) applique ledit enrobage avec une quantité qui n'est pas supérieure à 2,5% en poids de bitume résiduel.

3. Procédé selon la revendication 1 ou 2, dans lequel les bitumes de la première et de la seconde émulsions ont chacun un point de ramollissement (NFT 66.008) dans la plage de 20 à 85 et une pénétration (valeur pen) (NFT 66.004) dans la plage de 20 à 80.

4. Procédé selon la revendication 3, dans lequel le bitume de la première émulsion a une valeur pen dans la plage de 20 à 80, en particulier de 35 à 55.

5. Procédé selon l'une quelconque des revendications 1 à 4, dans lequel le bitume de la seconde émulsion a une valeur pen égale ou supérieure à celle du bitume de la première émulsion.

6. Procédé selon l'une quelconque des revendications 1 à 5, dans lequel le bitume de la seconde émulsion est un bitume modifié par un polymère et dans lequel le polymère peut avoir un poids moléculaire moyen en nombre ($M_n$) dans la plage de 2000 à 300.000.

7. Procédé selon l'une quelconque des revendications 1 à 6, dans lequel le bitume de la seconde émulsion est fluidifié.

8. Procédé selon l'une quelconque des revendications 1 à 7, dans lequel on utilise 1 à 4% en poids, en particulier 1 à 3% en poids, par rapport au poids de l'agrégat enrobé, de la première émulsion à l'étape (a) et/ou 3 à 7% en poids, en particulier 3 à 6% en poids, par rapport au poids de l'agrégat enrobé, de la seconde émulsion à l'étape (b).

9. Procédé selon l'une quelconque des revendications 1 à 8, dans lequel au moins la première émulsion a un diamètre particulaire dans la plage de 2 à 8 μm, en particulier de 2 à 6 μm, avec un écart-type inférieur à 0,3, en particulier qui n'est pas supérieur à 0,25.

10. Procédé selon l'une quelconque des revendications 1 à 9, dans lequel au moins la première émulsion est préparée en utilisant un mélangeur statique ou une série de mélangeurs statiques reliés en série.

11. Route ou surface pavée similaire construite en utilisant une composition de bitume mélangée à froid réalisée par le procédé selon l'une quelconque des revendications 1 à 10.